# EUROPEAN PATENT SPECIFICATION

(11) **EP 3 193 051 B1**
(45) Date of publication and mention of the grant of the patent: **03.04.2019**
(21) Application number: 16151415.3
(22) Date of filing: 15.01.2016
(51) Int. Cl.: F16K 1/52, F24D 19/10

(54) **VALVE ARRANGEMENT AND INSERT FOR A VALVE ARRANGEMENT**
VENTILANORDNUNG UND EINSATZ FÜR EINE VENTILANORDNUNG
AGENCEMENT DE SOUPAPE ET INSERT POUR UN AGENCEMENT DE SOUPAPE

(43) Date of publication of application: 19.07.2017
(73) Proprietor: Danfoss A/S, 6430 Nordborg (DK)
(72) Inventor: Clausen, Anders Østergaard, 8680 Ry (DK); Sigurdsson, Haraldur, 8240 Risskov (DK); Hølck, Poul, 8300 Odder (DK)
(74) Representative: Keil & Schaafhausen Patent- und Rechtsanwälte PartGmbB

(56) References cited:
- EP-A1- 2 482 160
- EP-A1- 2 988 071
- US-A1- 2012 216 897

## Description

The present invention relates to a valve arrangement comprising a valve housing, a valve inlet, a valve outlet, a flow valve element and a flow valve seat, the flow valve seat being arranged in a flow path connecting the valve inlet to the valve outlet and the flow valve element cooperating with the flow valve seat, the valve arrangement comprising a pressure valve element for determining a predetermined flow at a predetermined opening position of the flow valve element, wherein the valve arrangement comprises an insert, the pressure valve element being mounted to the insert.

Such a valve arrangement is known from EP 2 482 160 A1 or EP 2 988 071 A1.

A further valve arrangement is known, for example, from US 7 246 635 B2.

It is desired to have a constant fluid throughput through such a valve arrangement at a predetermined opening position of the flow valve element, independent of the installation site. However, for example, the inlet pressure at the valve input may be much higher at a first installation site, for example on the ground floor of a building, than at a second installation site, for example on the top floor of the building, assuming the fluid source is supplied to the valve arrangement from a basement of the building. Then a predetermined opening position of the flow valve element may correspond to different fluid throughputs through the valve at the first installation site and at the second installation site. Therefore, for example, a heat transfer to the first installation site may be much too high while a heat transfer to the second installation site may be too low, given the valve arrangement is part of a heater device.

To overcome this issue, valve arrangements comprising pressure valve elements in addition to flow valve elements, as described in the outset, are known, the pressure valve element maintaining a constant pressure drop over the flow valve element at the predetermined opening position of the flow valve element.

However, providing such a pressure valve element in a valve arrangement may be complicated or may take up considerable space. The valve housing has to be cast or machined accordingly in a sophisticated manner and having the additional pressure valve element in the valve housing together with the flow valve element may prevent compact design of the valve arrangement.

The objective of the invention is therefore to provide a valve arrangement which is equipped with a pressure valve element in an easy and compact way.

The objective is solved by the valve arrangement as described in the outset in that the insert comprises one or more elongated grooves, the grooves reducing velocity of a fluid flow through the insert.

The insert can easily be produced and combined with the valve arrangement while the valve housing can be designed at low complexity. Therefore, the valve arrangement is easily equipped with a pressure valve element while keeping a compact design. The grooves lead to a decreased flow noise in an easy way and with compact construction. Having flat walls around the pressure valve element may lead to unwanted flow noise. The grooves can decelerate the fluid flow and thus reduce noise.

It is preferred that the insert comprises the flow valve seat. This may allow to further simplify the machining of the valve housing while having a more compact design. It is preferred that the insert comprises a plastic material. In some embodiments, the insert consists of a plastic material. The insert may be cast or molded and thus the flow valve seat may be cast or molded together with the insert. Thus, production costs may be low and providing the flow valve seat to the valve arrangement can be easy.

Preferably, the pressure valve element is mounted translatably to the insert, in particular via a snap connection. A snap connection is a very easy and convenient way for connecting the pressure valve element to the insert. Therefore, production of the valve arrangement can be easy and quick. The pressure valve element may preferably translate with respect to the insert and thus regulate the fluid flow from the valve inlet to the valve outlet in order to maintain the constant pressure over the flow valve element.

Preferably, the insert comprises a holder element being arranged in the flow path, the pressure valve element being mounted translatably on the holder element. This allows easy mounting of the pressure valve element without blocking consiterable flow cross-section of the flow path. The annular holder element is preferably arranged coaxially concentric with respect to the insert.

However, instead of the holder element in some embodiments of the invention connection arms may be provided, the connection arms connecting the pressure valve element directly to the insert. Preferably, the holder element is mounted to the insert by means of two or more pairs of connection arms then. It is however preferred, that the holder element is mounted to the insert by means of two or more pairs of connection arms. The holder element can be an annular holder element.

In a preferred embodiment of the invention the pressure valve element comprises two or more mounting bars slidably cooperating with the holder element so that the pressure valve element is mounted translatably on the holder element. The mounting bars are preferably part of a snap connector. Thus, for example, the mounting bars may be adapted to be snapped to the holder element. Therefore, a very easy way of connecting the pressure valve element to the insert can be provided. Preferably, the connection arms of the holder element and the mounting bars of the pressure valve element are arranged in a circular order alternating with each other.

It is preferred that one or more of the mounting bars comprises a stopping element which prevents the pressure valve element from getting lost from the holder element. Preferably, the stopping elements are part of the snap connection. It is preferred, that the mounting bars are elastic in a radial direction so that the pressure valve element may be slided into an inner opening of the holder element, the stopping element preventing the pressure valve element from getting lost from the holder element once the mounting bars are inserted into the holder element. Thus, preferably, the annular holder element and the mounting bars having the stopping elements cooperate with each other in order to provide the snap connection.

Preferably, the stopping element is formed integrally with each mounting bar. It is preferred that the mounting bars are made from a plastic material. It is furthermore preferred that the stopping elements are made from the plastic material. Therefore, the stopping elements may be formed to the mounting bars in a casting or molding process in order to have the valve arrangement which is easy to obtain at low cost. Accordingly, it is most preferred that the pressure valve element is made of the plastic material so that the pressure valve element, the mounting bars and the stopping elements can be cast or molded together in the same production step as an integral unit.

It is preferred that the stopping element determines a maximum opening position of the pressure valve element. In the maximum opening position the pressure valve element is preferably in a position of maximum distance to the flow valve seat. Thus, the flow cross-section available in the insert is maximized. This may allow to compensate for low input pressure. The stopping element is therefore preferably arranged at an end section of the mounting bars so that the length of the mounting bars determines the maximum opening position of the pressure valve.

In a preferred embodiment of the invention the valve arrangement comprises a spring element which biases the pressure valve element into the maximum opening position. The force exerted by the spring element may define the differential pressure. Thus, a spring element exerting a strong force will demand for a strong differential pressure before the pressure valve element reduces the flow cross section of the flow path. The spring is preferably supported with a first end on an inner surface of the insert next to the flow valve seat, the spring force working against the flow direction through the flow valve seat. Preferably the spring is supported with a second end on the pressure valve element. It is furthermore preferred that the spring coaxially surrounds the mounting bars and the connection arms. This may allow for a compact design of the insert and thus the valve arrangement.

Preferably, one or more of the elongated grooves comprise a flow cross section, the flow cross section decreasing in a flow direction of the fluid flow towards the valve outlet. Having decreasing flow cross-section, the groove may substantially decrease the speed of the fluid flow through the insert. This way, fluid noise may be greatly reduced. However, there are embodiments of the invention where the grooves have a form different from decreasing cross sections which may also lead to a speed reduction and thus a low noise level.

Preferably, there are two or more grooves. An increased number of grooves may increase the deceleration of the fluid flow and thus the noise level. Preferably, there are four grooves, more preferably there are eight grooves, even more preferably there are twelve grooves.

In a preferred embodiment of the invention the two or more grooves are arranged in pairs opposing each other. This can lead to a homogenous slow down effect on the fluid flow which may reduce turbulences and thus flow noise.

In a preferred embodiment said insert and/or said valve element are fabricated from plastic material, in particular from injection molded plastic material. Using plastic material has a number of advantages. After the production of the respective parts no further machining is necessary. Plastic material is available at low cost. The risk of corrosion is dramatically reduced.

It is preferred that the insert is of a cylindrical shape, the insert having a circumferential wall radially surrounding the pressure valve element. Such an insert may be easy to produce, preferably by casting or molding. Thus, it can be provided at a low price and it can be inserted easily into the valve housing. A preferred cylindrical shape is a circular cylindrical shape.

In a preferred embodiment of the invention, the circumferential wall comprises the grooves, the grooves being elongated with respect to an axial extension of the circumferential wall and being arranged in an annular array on an inner surface of the circumferential wall. This way the grooves may be easily provided on the insert. Thus, there is no need to make use of sophisticated machining or casting operations on the valve housing in order to form the grooves. This allows to have a low cost valve arrangement comprising a pressure valve element and exhibiting low fluid noise.

Furthermore, the object of the invention is solved by an insert for a valve arrangement according to the invention. Providing such an insert will allow to have a valve arrangement which is designed in a compact way and available at a low cost. It may be understood that the insert according to the invention may show all of the features described above in view of the insert of the valve arrangement.

Preferred embodiments on the invention will now be described in more detail with reference to the drawings, in which:
- Fig. 1: shows a cross-sectional view of a first embodiment of a valve arrangement according to the invention;
- Fig. 2: shows a cross-sectional view of a second embodiment of a valve arrangement according to the invention;
- Fig. 3: shows a more detailed cross-sectional view of the second embodiment;
- Fig. 4: shows a perspective view of the cross sectional view depicted in fig. 3;
- Fig. 5a and 5b: show a first opening position and a second opening position of the pressure valve element, respectively;
- Fig. 6: shows a bottom perspective view of a first embodiment of an insert for a valve arrangement according to the invention; and
- Fig. 7: shows a bottom view of a second embodiment of an insert for a valve arrangement according to the invention.

Reference signs are introduced into the detailed description of embodiments and into the patent claims. However, the reference signs are in no way meant to be limiting but shall only improve readability.

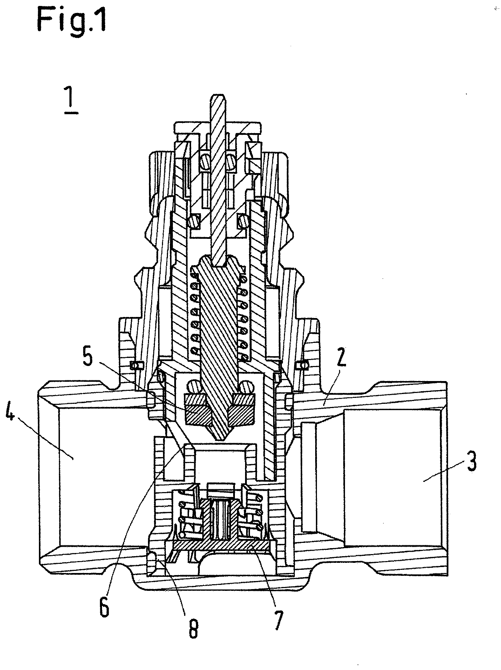

Fig. 1 shows a first embodiment of a valve arrangement 1 according to the invention. The valve arrangement 1 comprises a valve housing 2, a valve inlet 3, a valve outlet 4, a flow valve element 5 and a flow valve seat 6. The flow valve seat 6 is arranged in a flow path connecting the valve inlet 3 to the valve outlet 4. The flow valve element 5 cooperates with the flow valve seat 6. In addition to the flow valve element 5, the valve arrangement 1 comprises a pressure valve element 7 for determining a predetermined flow through the valve arrangement at a predetermined opening position of the flow valve element 5.

As can be seen in fig. 1, the valve arrangement 1 comprises an insert 8, the pressure valve element 7 being mounted to the insert 8. This allows to provide the pressure valve element 7 to the valve arrangement 1 in an easy way and at a low cost. The casting and machining process of the valve housing 2 may thus be simplified.

More details of the invention will be described referring to the following figures which show a second embodiment of the valve arrangement 1 according to the invention.

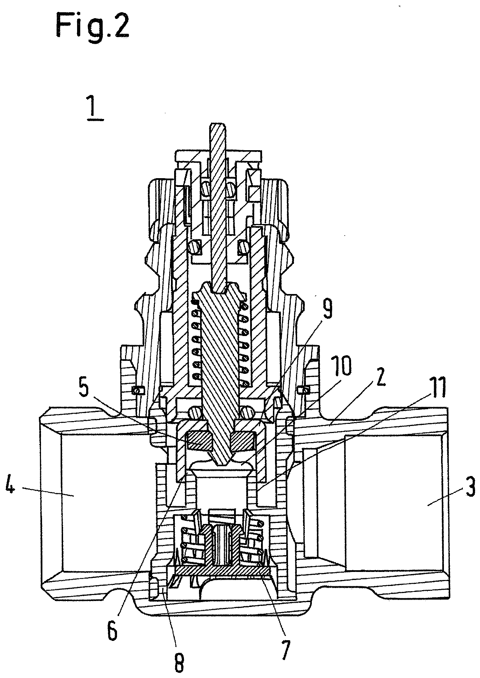

The second embodiment shown in Fig.2 is basically designed just as the first embodiment shown in fig. 1. However, in order to regulate the fluid flow through the valve arrangement 1, the valve arrangement 1 comprises a flow regulation cup 9 having a throttle opening 10. The flow regulation cup 9 houses the flow valve element 5. Furthermore, the flow regulation cup 9 radially surrounds a circumferential wall of a valve seat support 11 for the flow valve seat 6. The flow regulation cup 9 allows an improved throttling of the fluid flow from the valve inlet 3 to the valve outlet 4 in comparison to the first embodiment in which only the flow valve element 5 controls the throttling.

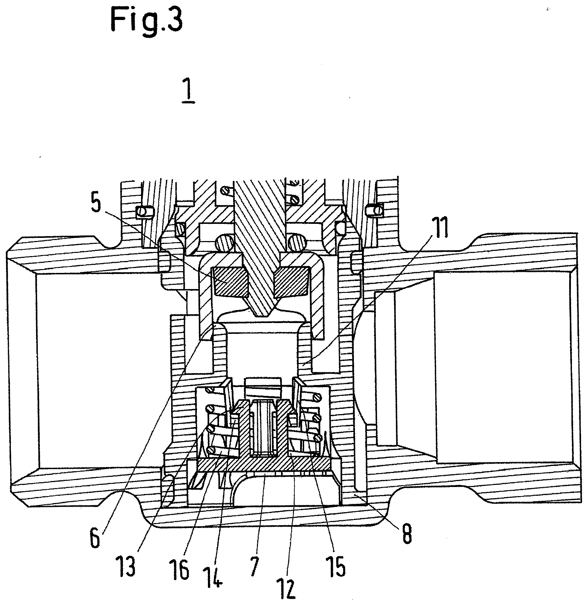

Fig. 3 shows a more detailed view of the second embodiment of the invention, specifically of the pressure valve element 7 and how it is mounted to the insert 8. It should be noted that the mounting of the pressure valve element 7 and the design of the insert 8 could be the same in the first embodiment of the invention.

As can be seen in fig. 3, the insert 8 comprises the flow valve seat 6. Furthermore, the pressure valve element 7 is mounted translatably to the insert 8 via a snap connection. In order to establish the snap connection, the pressure valve element 7 comprises mounting bars 12, in this embodiment four mounting bars 12. The mounting bars 12 each comprise a stopping element 13 at an end of each mounting bar 12. The pressure valve element 7, the mounting bars 12 and the stopping elements 13 are made of a plastic material and were cast together in a compact and low cost design.

As can be seen in fig. 3, the insert 8 comprises an annular holder element 14 being arranged in the flow path, the pressure valve element 7 being mounted translatably on the holder element 14 via the mounting bars 12. The stopping elements 13 prevent the pressure valve element 7 from getting lost from the holder element 14. Furthermore, the stopping elements 13 determine a maximum opening position of the pressure valve element 7 as the stopping elements 13 prevent the pressure valve element 7 from opening any further once they are in contact with the holder element 14.

As fig. 3 shows, the holder element 14 comprises connection arms 15 which connect the holder element 14 to the insert 8. Due to this the holder element 14 is arranged coaxially and concentrically in view of the insert 8 which allows a good centering of the pressure valve element 7 without blocking the flow path in an excessive way.

Fig. 3 shows that the valve arrangement 1 comprises a spring element 16 which biases the pressure valve element 7 into the maximum opening position. In order to achieve this, a first end of the spring element 16 is supported on an inner wall of the insert 8, next to the flow valve seat support 11 while a second end of the spring element 16 is supported on a rear surface of the pressure valve element 7. The spring element 16 in this case is a spiral spring. To achieve a compact construction, the spring element 16 coaxially surrounds the mounting bars 12 and the connection arms 15.

The spring element 16 determines the differential pressure. Therefore, when the spring element 16 is rather rigid, the pressure of the fluid flow must be rather large in order to close the pressure valve element 7, thus compress the spring element 16. When the fluid pressure is too low, the spring element 16 will otherwise keep the pressure valve element 7 in the maximum opening position. An increasing fluid pressure will result in a closing of the pressure valve element 7, thus maintaining a constant pressure over the flow valve element 5 at a predetermined opening position of the flow valve element 5.

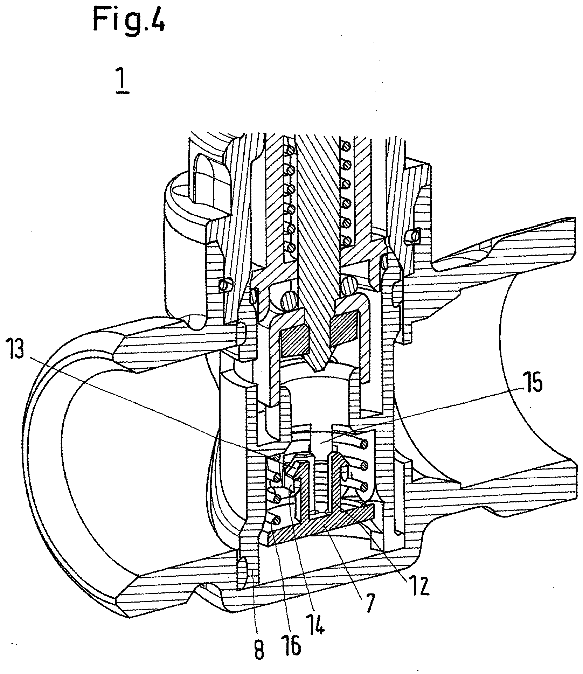

The perspective view given in fig. 4 shows more constructional details of the pressure valve element 7 and how it is mounted to the insert 8. In this embodiment, there are four connection arms 15 connecting the annular holder element 14 to the insert 8. Furthermore, there are four mounting bars 12, each having the stopping element 13, the mounting bars 12 mounting the pressure valve element 7 to the annular holder element 14. The mounting bars 12 and the connection arms 15 are arranged in a circular array, such that one stopping element 13 is interposed between two of the connection arms 15. This way the snap connection is established and the pressure valve element 7 is securely mounted to the holder element 14. The stopping elements 13 provided at end sections of the mounting bars 12 prevent the pressure valve element 7 from getting lost from the holder element 7. Furthermore, as the spring element 16 is secured between the inner surface of the insert 8 next to the flow valve seat support 11 and the back surface of the pressure valve element 7, there is also a strongly reduced risk of the spring element 16 getting loose.

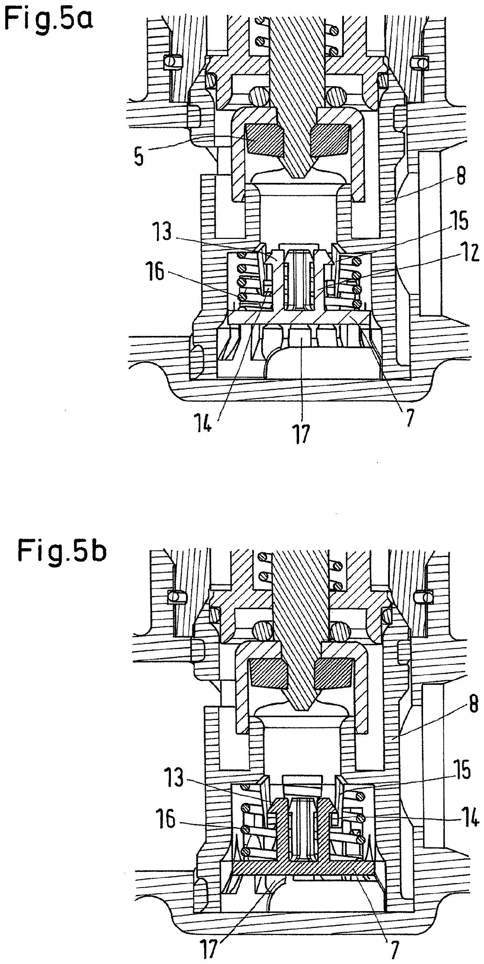

Fig. 5a and 5b now show two different opening positions of the pressure valve element 7. In the first opening position shown in fig. 5a, the pressure valve element reduces the flow cross section through the flow path in comparison to the maximum opening position. This means that a constant pressure over the flow valve element 5 at the predetermined opening position of the flow valve element 5 is maintained even when the pressure at the valve inlet 3 is rather high. This is due to the fact that a pressure difference between the rear surface of the pressure valve element 7 and the valve inlet 3 will compress the spring element 16 and thus move the pressure valve element 7 closer to the flow valve seat support 11. By that the flow cross section in the insert 8 is reduced and the constant pressure over the flow valve element 5 at the predetermined opening position of the flow valve element 5 is maintained.

As depicted in fig. 5a, the insert 8 which is of a cylindrical shape and has a circumferential wall radially surrounding the pressure valve element 7, comprises grooves 17. The grooves 17 comprise a flow cross section, the flow cross section decreasing in a flow direction of the fluid flow towards the valve outlet 4. Thus, they are reducing velocity of the fluid flow through the insert 8 in cooperation with the pressure valve element 7. This leads to a reduced flow noise of the valve arrangement 1.

Fig. 5b now shows a pressure valve arrangement 7 in the maximum opening position. This maximizes the available flow cross section through the insert 8. The spring element 16 biases the pressure valve element 7 into this maximum opening position. This allows to maintain the constant pressure over the flow valve element 5 at the predetermined opening position of the flow valve element 5 even when the inlet pressure at the valve inlet 3 is comparably low.

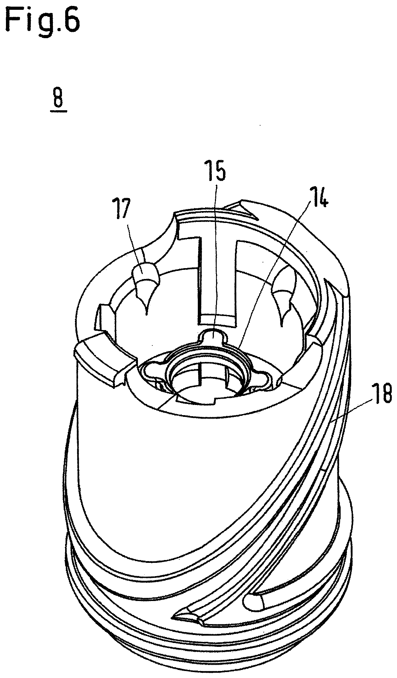

Fig. 6 shows a first embodiment of the insert 8 for the valve arrangement 1. The insert 8 comprises the holder element 14 and the grooves 17. The holder element 14 is of an annular shape and connected to the insert 8 by means of four connection arms 15. The connection arms 15 are arranged at an outer circumferential line of the annular holder element 14. The annular holder element 14 is connected to the connecting arms at end sections of the connecting arms 15.

As can be seen in fig. 6, there is a plurality of grooves 14 arranged on the circumferential wall of the insert 8. More specifically, the grooves 17 are elongated with respect to an axial extension of the circumferential wall and arranged in an annular array on the inner surface of the circumferential wall. Furthermore, the grooves 17 are arranged in pairs opposing each other. This allows a homogenous reduction of flow velocity through the insert 8.

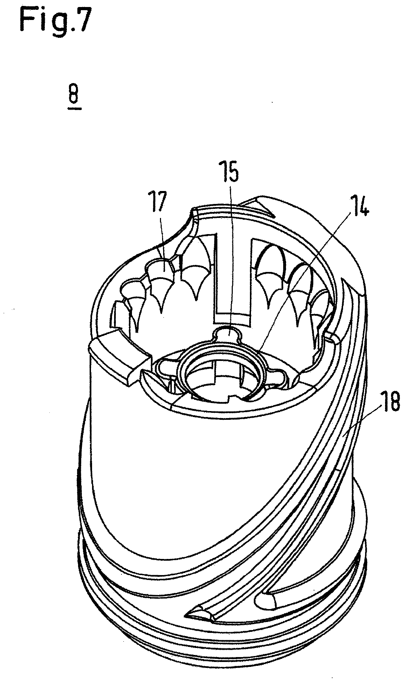

Fig. 7 shows a second embodiment of the insert 8 for the valve arrangement 1. Most features are already known from the first embodiment of the insert 8. However, in the second embodiment the number of grooves 17 is increased in comparison to the first embodiment. This may allow for even better reduction of the velocity of the fluid flow and thus even less flow noise.

As indicated in fig. 6 and 7, insert 8 in some embodiments of the invention carries a gasket element 18. The gasket element 18 has a slanted section surrounding the circumferential wall of the insert 8. This allows to provide a fluid sealing for a gap between the valve housing 2 and the insert 8 so that the fluid flow passing along the flow path from the valve inlet 3 to the valve outlet 4 cannot circumvent the flow valve seat 6.

## Claims

1. A valve arrangement (1) comprising a valve housing (2), a valve inlet (3), a valve outlet (4), a flow valve element (5) and a flow valve seat (6), the flow valve seat (6) being arranged in a flow path connecting the valve inlet (3) to the valve outlet (4) and the flow valve element (5) cooperating with the flow valve seat (6), the valve arrangement (1) comprising a pressure valve element (7) for determining a predetermined flow at a predetermined opening position of the flow valve element (5), wherein the valve arrangement (1) comprises an insert (8), the pressure valve element (7) being mounted to the insert (8), **characterized in that** the insert (8) comprises one or more elongated grooves (17), the grooves (17) reducing velocity of a fluid flow through the insert (8).

2. The valve arrangement according to claim 1, **characterized in that** the insert (8) comprises the flow valve seat (6).

3. The valve arrangement according to claim 1 or claim 2, **characterized in that** the pressure valve element (7) is mounted translatably to the insert (8).

4. The valve arrangement according to any of the claims 1 to 3, **characterized in that** the insert (8) comprises a holder element (14) being arranged in the flow path, the pressure valve element (7) being mounted translatably on the holder element (14).

5. The valve arrangement according to claim 4, **characterized in that** the pressure valve element (7) comprises two or more mounting bars (12) slidably cooperating with the holder element (14) so that the pressure valve element (7) is mounted translatably on the holder element (14).

6. The valve arrangement according to claim 5, **characterized in that** one or more of the mounting bars (12) comprise a stopping element (13) which prevents the pressure valve element (7) from getting loose from the holder element (14), said stopping element (13) being preferably formed integrally with each mounting bar (12).

7. The valve arrangement according to claim 6, **characterized in that** the stopping element (13) determines a maximum opening position of the pressure valve element (7).

8. The valve arrangement according to any of the claims 1 to 7, **characterized in that** the valve arrangement (1) comprises a spring element (16) which biases the pressure valve element (7) into a maximum opening position.

9. The valve arrangement according to any of claims 1 to 8, **characterized in that** one or more of the grooves (17) comprise a flow cross-section, the flow cross-section decreasing in a flow direction of the fluid flow towards the valve outlet (4).

10. The valve arrangement according to any of claims 1 to 9, **characterized in that** there are two or more grooves (17), wherein preferably the two or more grooves (17) are arranged in pairs opposing each other.

11. The valve arrangement according to any of the claims 1 to 10, **characterized in that** the insert (8) is of a cylindrical shape, the insert (8) having a circumferential wall radially surrounding the pressure valve element (7).

12. The valve arrangement according to claim 11 at said insert (8) and/or said valve element (7) are fabricated from plastic material, in particular from injection molded plastic material.

13. The valve arrangement according to claim 11 or 12, **characterized in that** the circumferential wall comprises the grooves (17), the grooves (17) being elongated with respect to an axial extension of the circumferential wall and being arranged in an annular array on an inner surface of the circumferential wall.

## Patentansprüche

1. Ventilanordnung (1), umfassend ein Ventilgehäuse (2), einen Ventileinlass (3), einen Ventilauslass (4), ein Durchflussventilelement (5) und einen Durchflussventilsitz (6), wobei der Durchflussventilsitz (6) in einem Durchflusspfad angeordnet ist, der den Ventileinlass (3) mit dem Ventilauslass (4) verbindet, und wobei das Durchflussventilelement (5) mit dem Durchflussventilsitz (6) zusammenwirkt, wobei die Ventilanordnung (1) ein Druckventilelement (7) zum Bestimmen eines vorbestimmten Durchflusses an einer vorbestimmten Öffnungsposition des Durchflussventilelements (5) umfasst, wobei die Ventilanordnung (1) einen Einsatz (8) umfasst, das Druckventilelement (7) an dem Einsatz (8) montiert ist, **dadurch gekennzeichnet, dass** der Einsatz (8) eine oder mehrere längliche Rillen (17) umfasst, wobei die Rillen (17) die Geschwindigkeit eines Fluiddurchflusses durch den Einsatz (8) hindurch reduzieren.

2. Ventilanordnung nach Anspruch 1, **dadurch gekennzeichnet, dass** der Einsatz (8) den Durchflussventilsitz (6) umfasst.

3. Ventilanordnung nach Anspruch 1 oder Anspruch 2, **dadurch gekennzeichnet, dass** das Druckventilelement (7) translatierbar an dem Einsatz (8) montiert ist.

4. Ventilanordnung nach einem der Ansprüche 1 bis 3, **dadurch gekennzeichnet, dass** der Einsatz (8) ein Halteelement (14) umfasst, das in dem Durchflusspfad angeordnet ist, wobei das Druckventilelement (7) translatierbar auf dem Halteelement (14) montiert ist.

5. Ventilanordnung nach Anspruch 4, **dadurch gekennzeichnet, dass** das Druckventilelement (7) zwei oder mehr Montageschienen (12) umfasst, die gleitfähig mit dem Halteelement (14) zusammenwirken, so dass das Druckventilelement (7) translatierbar auf dem Halteelement (14) montiert ist.

6. Ventilanordnung nach Anspruch 5, **dadurch gekennzeichnet, dass** eine oder mehrere der Montageschienen (12) ein Stopperelement (13) umfasst bzw. umfassen, das verhindert, dass sich das Druckventilelement (7) von dem Halteelement (14) löst, wobei das Stopperelement (13) vorzugsweise integral mit jeder Montageschiene (12) gebildet ist.

7. Ventilanordnung nach Anspruch 6, **dadurch gekennzeichnet, dass** das Stopperelement (13) die maximale Öffnungsposition des Druckventilelements (7) bestimmt.

8. Ventilanordnung nach einem der Ansprüche 1 bis 7, **dadurch gekennzeichnet, dass** die Ventilanordnung (1) ein Federelement (16) umfasst, welches das Druckventilelement (7) in eine maximale Öffnungsposition vorspannt.

9. Ventilanordnung nach einem der Ansprüche 1 bis 8, **dadurch gekennzeichnet, dass** eine oder mehrere der Rillen (17) einen Durchflussquerschnitt umfassen, wobei der Durchflussquerschnitt in einer Durchflussrichtung des Fluiddurchflusses in Richtung des Ventilauslasses (4) abnimmt.

10. Ventilanordnung nach einem der Ansprüche 1 bis 9, **dadurch gekennzeichnet, dass** zwei oder mehr Rillen (17) vorhanden sind, wobei die zwei oder mehr Rillen (17) vorzugsweise in Paaren angeordnet sind, die einander gegenüber liegen.

11. Ventilanordnung nach einem der Ansprüche 1 bis 10, **dadurch gekennzeichnet, dass** der Einsatz (8) von zylindrischer Form ist, wobei der Einsatz (8) eine Umkreiswand aufweist, die das Druckventilelement (7) radial umgibt.

12. Ventilanordnung nach Anspruch 11, die an dem Einsatz (8) und/oder dem Ventilelement (7) aus Kunststoffmaterial gefertigt ist, insbesondere aus Spritzgusskunststoffmaterial.

13. Ventilanordnung nach Anspruch 11 oder 12, **dadurch gekennzeichnet, dass** die Umkreiswand die Rillen (17) umfasst, wobei die Rillen (17) in Bezug auf eine axiale Ausdehnung der Umkreiswand verlängert sind und in einer ringförmigen Gruppierung auf einer Innenfläche der Umkreiswand angeordnet sind.

## Revendications

1. Agencement de soupape (1) comprenant un boîtier de soupape (2), une entrée de soupape (3), une sortie de soupape (4), un élément de soupape d'écoulement (5) et un siège de soupape d'écoulement (6), le siège de soupape d'écoulement (6) étant agencé dans un trajet d'écoulement reliant l'entrée de soupape (3) à la sortie de soupape (4) et l'élément de soupape d'écoulement (5) coopérant avec le siège de soupape d'écoulement (6), l'agencement de soupape (1) comprenant un élément de soupape de pression (7) pour déterminer un écoulement prédéterminé à une position d'ouverture prédéterminée de l'élément de soupape d'écoulement (5), l'agencement de soupape (1) comprenant un insert (8), l'élément de soupape de pression (7) étant monté sur l'insert (8), **caractérisé en ce que** l'insert (8) comprend une ou plusieurs rainures allongées (17), les rainures (17) réduisant la vitesse d'écoulement d'un fluide à travers l'insert (8).

2. Agencement de soupape selon la revendication 1, **caractérisé en ce que** l'insert (8) comprend le siège de soupape d'écoulement (6).

3. Agencement de soupape selon la revendication 1 ou la revendication 2, **caractérisé en ce que** l'élément de soupape de pression (7) est monté en translation sur l'insert (8).

4. Agencement de soupape selon l'une quelconque des revendications 1 à 3, **caractérisé en ce que** l'insert (8) comprend un élément de retenue (14) disposé dans le trajet d'écoulement, l'élément de soupape de pression (7) étant monté en translation sur l'élément de retenue (14).

5. Agencement de soupape selon la revendication 4, **caractérisé en ce que** l'élément de soupape de pression (7) comprend au moins deux barres de montage (12) coopérant de manière coulissante avec l'élément de retenue (14) de sorte que l'élément de soupape de pression (7) est monté en translation sur l'élément de retenue (14).

6. Agencement de soupape selon la revendication 5, **caractérisé en ce qu'**au moins une barre de montage (12) comprend un élément d'arrêt (13) qui empêche l'élément de soupape de pression (7) de se détacher de l'élément de retenue (14), ledit élément d'arrêt (13) étant de préférence formé intégralement avec chaque barre de montage (12).

7. Agencement de soupape selon la revendication 6, **caractérisé en ce que** l'élément d'arrêt (13) détermine une position d'ouverture maximale de l'élément de soupape de pression (7).

8. Agencement de soupape selon l'une quelconque des revendications 1 à 7, **caractérisé en ce que** l'agencement de soupape (1) comprend un élément ressort (16) qui sollicite l'élément de soupape de pression (7) vers une position d'ouverture maximale.

9. Agencement de soupape selon l'une quelconque des revendications 1 à 8, **caractérisé en ce qu'**au moins une rainure (17) présente une section d'écoulement, la section d'écoulement diminuant dans une direction d'écoulement de l'écoulement du fluide vers la sortie de soupape (4).

10. Agencement de soupape selon l'une quelconque des revendications 1 à 9, **caractérisé en ce qu'**il y a au moins deux rainures (17), les au moins deux rainures (17) étant de préférence disposées en paires mutuellement opposées.

11. Agencement de soupape selon l'une quelconque des revendications 1 à 10, **caractérisé en ce que** l'insert (8) est de forme cylindrique, l'insert (8) ayant une paroi périphérique entourant radialement l'élément de soupape de pression (7).

12. Agencement de soupape selon la revendication 11, **caractérisé en ce que** l'insert (8) et/ou l'élément de soupape (7) est réalisé en matière plastique, en particulier en matière plastique moulée par injection.

13. Agencement de soupape selon la revendication 11 ou 12, **caractérisé en ce que** la paroi périphérique comprend les rainures (17), les rainures (17) étant allongées par rapport à une extension axiale de la paroi périphérique et étant disposées en une rangée annulaire sur une surface intérieure de la paroi périphérique.
